# EUROPEAN PATENT SPECIFICATION

(11) **EP 0 745 615 B1**
(45) Date of publication and mention of the grant of the patent: **28.07.2004**
(21) Application number: 95941833.6
(22) Date of filing: 20.12.1995
(51) Int. Cl.: C08F 4/655, C08F 10/02

(54) **PROCESS FOR THE PREPARATION OF ETHYLENE POLYMER AND ETHYLENE POLYMER**
VERFAHREN ZUR HERSTELLUNG VON ETHYLENPOLYMER UND ETHYLENPOLYMER
PROCEDE DE PRODUCTION DE POLYMERE D'ETHYLENE ET POLYMERE D'ETHYLENE OBTENU

(30) Priority: 20.12.1994 JP 31695394
(43) Date of publication of application: 04.12.1996
(73) Proprietor: Mitsui Chemicals, Inc., Tokyo (JP)
(72) Inventor: TSUTSUI, Toshiyuki, Yamaguchi 740 (JP); SAGANE, Toshihiro, Yamaguchi 740 (JP)
(74) Representative: Hansen, Bernd, Dr. Dipl.-Chem.
(86) International application number: PCT/JP1995/002618
(87) International publication number: WO 1996/019504

(56) References cited:
- EP-A- 0 584 609
- EP-A- 0 612 769
- JP-A- 2 214 709
- JP-A- 3 021 607
- JP-A- 3 179 005
- JP-A- 3 207 704
- JP-T- 5 505 838

## Description

### TECHNICAL FIELD

The present invention relates to a process for preparing an ethylene polymer and to an ethylene polymer. More particularly, the invention relates to a process for preparing an ethylene polymer by which an ethylene (co)polymer having a high molecular weight can be obtained even at a high polymerization temperature and to an ethylene polymer obtained by this process.

### BACKGROUND ART

Low-crystalline ethylene copolymers, which are copolymers of ethylene and α-olefins, have been conventionally widely used as modifiers for thermoplastic resins such as polyethylene, polypropylene and an ethylenevinyl acetate copolymer.

For preparing such ethylene copolymers, there is known a process comprising copolymerizing ethylene and an α-olefin in the presence of a titanium catalyst which comprises a titanium compound and an organoaluminum compound or a vanadium catalyst which comprises a vanadium compound and an organoaluminum compound.

Further, a process comprising copolymerizing ethylene and an α-olefin in the presence of a metallocene catalyst which comprises a transition metal compound such as zirconocene and an organoaluminum oxy-compound (aluminoxane) has been recently proposed. It is known that use of the metallocene catalyst makes it possible to copolymerize ethylene and an α-olefin with high activities and to prepare an ethylene-α-olefin copolymer having a narrow composition distribution.

In the conventional solution polymerization process, ethylene is (co)polymerized at a temperature of usually 40 to 60 °C and a solvent is circulated to remove heat so as to stabilize the polymerization temperature. As for the heat removal device used herein, the heat transfer area of the device can be generally reduced according as the polymerization temperature becomes higher, provided that the quantity of heat to be removed is the same. For example, if the polymerization temperature is 100 °C, the necessary heat transfer area can be reduced to about 1/2 as large as the case of the polymerization temperature of 70 °C. Thus, when the polymerization temperature is raised, the necessary heat transfer area can be reduced. Consequently, the size of the heat removal device can be made smaller and the equipment cost can be decreased.

In the conventional processes, however, it was difficult to prepare polymers of high molecular weight by (co)polymerizing ethylene at a high temperature, e.g., not lower than about 80 °C, by the use of the aforesaid catalyst.

As a result of studies under the circumstances, the present inventors have found that when ethylene is (co)polymerized in the presence of a metallocene catalyst comprising a specific Group IVB transition metal compound and an organoaluminum oxy-compound, a polymer having a high molecular weight can be prepared even if the polymerization is carried out at a high temperature such as not lower than about 80 °C, and accomplished the present invention.

The present invention has been made in the light of such prior art as mentioned above, and it is an object of the invention to provide a process for preparing an ethylene polymer by which an ethylene (co)polymer having a high molecular weight can be obtained even at a high polymerization temperature and to provide an ethylene polymer obtained by this process.

### DISCLOSURE OF THE INVENTION

The process for preparing an ethylene polymer according to the invention is specified in the appended claim 1. Preferred embodiments of the process according to the invention are specified in the dependent claims 2 and 3.

According to the process for preparing an ethylene polymer of the invention, an ethylene (co)polymer having a high molecular weight can be obtained even if the polymerization temperature is high. According to the process of the invention, further, an ethylene copolymer having a high content of a comonomer can be obtained.

Furthermore, since the polymerization can be carried out at a temperature higher than those in the conventional processes, the size of a heat removal device can be made smaller and the cost of equipment can be decreased.

### BRIEF DESCRIPTION OF THE DRAWINGS

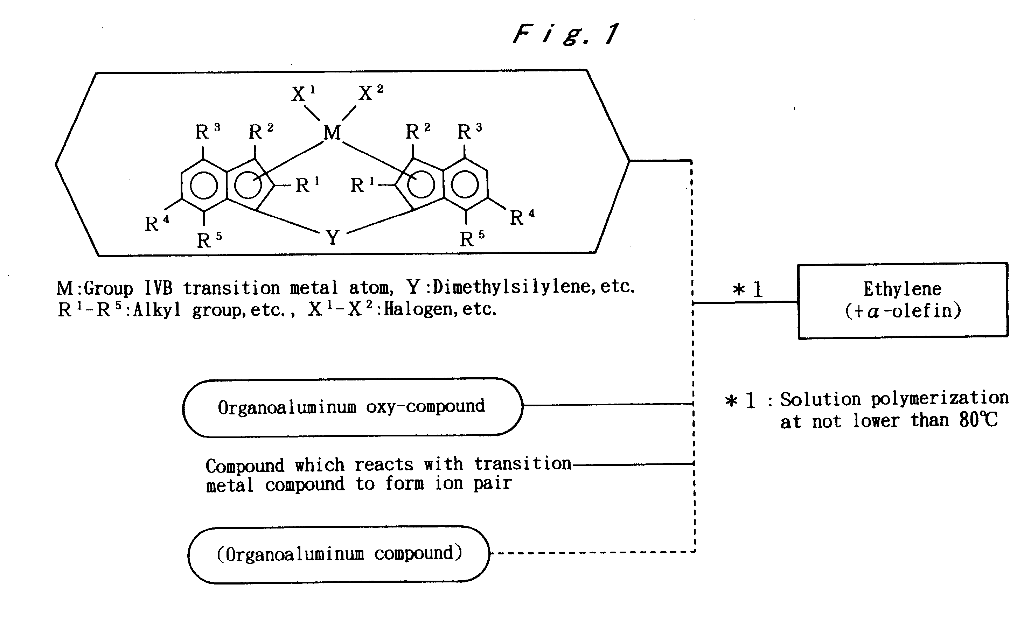

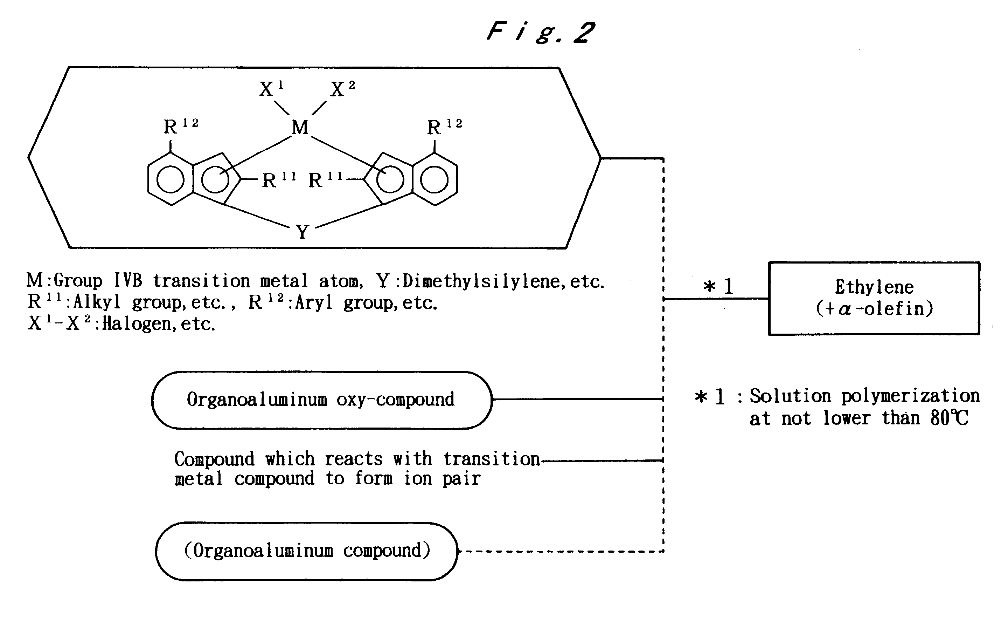

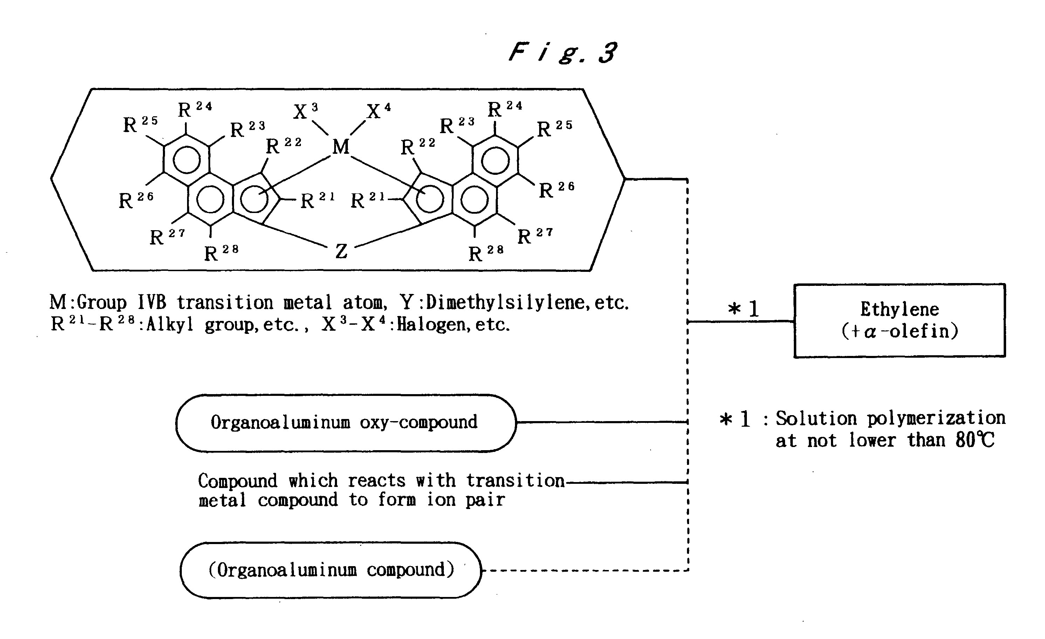

Figs. 1 to 3 are each an explanatory view showing steps for preparing an olefin polymerization catalyst used in the present invention.

### BEST MODE FOR CARRYING OUT THE INVENTION

The process for preparing an ethylene polymer according to the invention will be described in detail hereinafter.

The meaning of the term "polymerization" used herein is not limited to "homopolymerization" but may comprehend "copolymerization". Also, the meaning of the term "polymer" used herein is not limited to "homopolymer" but may comprehend "copolymer".

In the process for preparing an ethylene polymer according to the invention, an ethylene is (co)polymerized at a temperature of 120 to 200°C in the presence of a catalyst comprising:
(A) at least one Group IVB transition metal compound selected from compounds of the below-described formulas (I), (II) and (III), and
(B)
   (B-1) an organoaluminum oxy-compound, and/or
   (B-2) a boron compound selected from the group consisting of Lewis acid, ionic compound, borane compounds and carborane compounds which reacts with the Group IVB transition metal compound (A) to form an ion pair, and
(C) an organoaluminum compound.

First, the catalyst used in the invention is described.

In the present invention, at least one Group IVB transition metal compound selected from compounds of the following formulas (I) , (II) and (III) is used as the Group IVB transition metal compound (A).

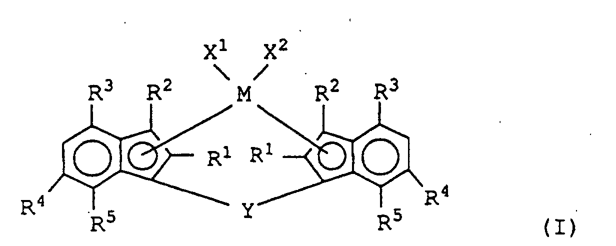

In the formula (I), M is zirconium.

R¹ and R² may be the same or different from each other, and are each hydrogen, an alkyl group of 1 to 3 carbon atoms.

Examples of the halogen atoms include fluorine, chlorine, bromine and iodine.

Examples of the hydrocarbon groups of 1 to 20 carbon atoms include alkyl groups, such as methyl, ethyl, propyl, butyl, hexyl, cyclohexyl, octyl, nonyl, dodecyl, eicosyl, norbornyl and adamantyl; alkenyl groups, such as vinyl, propenyl and cyclohexenyl; arylalkyl groups, such as benzyl, phenylethyl and phenylpropyl; and aryl groups, such as phenyl, tolyl, dimethylphenyl, trimethylphenyl, ethylphenyl, propylphenyl, biphenyl, α- or β-naphthyl, methylnaphthyl, anthryl, phenanthryl, benzylphenyl, pyrenyl, acenaphthyl, phenalenyl, aceanthrylenyl, tetrahydronaphthyl, indanyl and biphenylyl.

Examples of the halogenated hydrocarbon groups of 1 to 20 carbon atoms include those wherein halogens are substituted in the above-exemplified hydrocarbon groups of 1 to 20 carbon atoms.

Examples of the silicon-containing groups include methylsilyl, phenylsilyl, dimethylsilyl, diphenylsilyl, trimethylsilyl, triethylsilyl, tripropylsilyl, tricyclohexylislyl, triphenylsilyl, dimethylphenylsilyl, methyldiphenylsilyl, tritolylsilyl and trinaphthylsilyl.

Examples of the oxygen-containing groups include hydroxyl groups; alkoxy groups, such as methoxy, ethoxy, propoxy and butoxy; aryloxy groups, such as phenoxy, methylphenoxy, dimethylphenoxy and naphthoxy; and arylalkoxy groups, such as phenylmethoxy and phenylethoxy.

Examples of the sulfur-containing groups include those wherein oxygen is replaced with sulfur in the above-exemplified oxygen-containing groups; sulfonato groups, such as methylsulfonato, trifluoromethanesulfonato, phenylsulfonato, benzylsulfonato, p-toluenesulfonato, trimethylbenzenesulfonato, triisobutylbenzenesulfonato, p-chlorobenzenesulfonato and pentafluorobenzenesulfonato; and sulfinato groups, such as methylsulfinato, phenylsulfinato, benzenesulfinato, p-toluenesulfinato, trimethylbenzenesulfinato and pentafluorobenzenesulfinato.

Examples of the nitrogen-containing groups include amino groups; alkylamino groups, such as methylamino, dimethylamino, diethylamino, dipropylamino, dibutylamino and dicyclohexylamino; and arylamino or alkylarylamino groups, such as phenylamino, diphenylamino, ditolylamino, dinaphthylamino and methylphenylamino.

Examples of the phosphorus-containing groups include dimethylphosphino and diphenylphosphino.

Of these, preferred as R¹ is a hydrocarbon group of 1 to 3 carbon atoms, i.e., methyl, ethyl or propyl.

Preferred as R² is hydrogen or a hydrocarbon group of 1 to 3 carbon atoms, i.e., methyl, ethyl or propyl.

R³, R⁴ and R⁵ may be the same or different from each other, and are each methyl, ethyl, n-propyl, i-propyl, n-butyl, sec-butyl, tert-butyl, pentyl, hexyl and R⁴ may represent hydrogen. These alkyl groups may be substituted with halogen atoms or silicon-containing groups.

Of these, preferred as R³ is a secondary or tertiary alkyl group.

X¹ and X² may be the same or different from each other, and are each hydrogen, a halogen atom, a hydrocarbon group of 1 to 20 carbon atoms.

Examples of such atoms and groups include the same halogen atoms, hydrocarbon groups of 1 to 20 carbon atoms; halogenated hydrocarbon groups of 1 to 20 carbon atoms, oxygen-containing groups and sulfur containing groups as mentioned above.

Of these, preferred are halogen atoms and hydrocarbon groups of 1 to 20 carbon atoms.

Y is alkylsilylene, alkylarylsilylene or arylsilylene specifically, methylsilylene, dimethylsilylene, diethylsilylene, di(n-propyl)silylene, di(i-propyl)silylene, di(cyclohexyl)silylene, methylphenylsilylene, diphenylsilylene, di(p-tolyl)silylene and di(p-chlorophenyl)silylene).

Listed below are examples of the transition metal compounds represented by the formula (I).
rac-Dimethylsilylene-bis{1-(2,7-dimethyl-4-ethylindenyl)}zirconium dichloride,
rac-Dimethylsilylene-bis{1-(2,7-dimethyl-4-n-propylindenyl)}zirconium dichloride,
rac-Dimethylsilylene-bis{1-(2,7-dimethyl-4-i-propylindenyl)}zirconium dichloride,
rac-Dimethylsilylene-bis{1-(2,7-dimethyl-4-n-butylindenyl)}zirconium dichloride,
rac-Dimethylsilylene-bis{1-(2,7-dimethyl-4-sec-butylindenyl)}zirconium dichloride,
rac-Dimethylsilylene-bis{1-(2,7-dimethyl-4-t-butylindenyl)}zirconium dichloride,
rac-Dimethylsilylene-bis{1-(2,7-dimethyl-4-n-pentylindenyl)}zirconium dichloride,
rac-Dimethylsilylene-bis{1-(2,7-dimethyl-4-n-hexylindenyl)}zirconium dichloride,
rac-Dimethylsilylene-bis{1-(2,7-dimethyl-4-chloromethylindenyl)}zirconium dichloride,
rac-Dimethylsilylene-bis{1-(2,7-dimethyl-4-trimethylsilylmethylindenyl)}zirconium dichloride,
rac-Dimethylsilylene-bis{1-(2,7-dimethyl-4-trimethylsiloxymethylindenyl)}zirconium dichloride,
rac-Diethylsilylene-bis{1-(2,7-dimethyl-4-i-propylindenyl)}zirconium dichloride,
rac-Di(i-propyl)silylene-bis{1-(2,7-dimethyl-4-i-propylindenyl)}zirconium dichloride,
rac-Di(n-butyl)silylene-bis{1-(2,7-dimethyl-4-i-propylindenyl)}zirconium dichloride,
rac-Di(cyclohexyl)silylene-bis{1-(2,7-dimethyl-4-i-propylindenyl)}zirconium dichloride,
rac-Methylphenylsilylene-bis{1-(2,7-dimethyl-4-i-propylindenyl)}zirconium dichloride,
rac-Methylphenylsilylene-bis{1-(2,7-dimethyl-4-t-butylindenyl)}zirconium dichloride,
rac-Diphenylsilylene-bis{1-(2,7-dimethyl-4-t-butylindenyl)}zirconium dichloride,
rac-Diphenylsilylene-bis{1-(2,7-dimethyl-4-i-propylindenyl)}zirconium dichloride,
rac-Diphenylsilylene-bis{1-(2,7-dimethyl-4-ethylindenyl)}zirconium dichloride,
rac-Di(p-tolyl)silylene-bis{1-(2,7-dimethyl-4-i-propylindenyl)}zirconium dichloride,
rac-Di(p-chlorophenyl)silylene-bis{1-(2,7-dimethyl-4-i-propylindenyl)}zirconium dichloride,
rac-Dimethylsilylene-bis{1-(2-methyl-4-i-propyl-7-ethylindenyl)}zirconium dibromide,
rac-Dimethylsilylene-bis{1-(2,3,7-trimethyl-4-ethylindenyl)}zirconium dichloride,
rac-Dimethylsilylene-bis{1-(2,3,7-trimethyl-4-n-propylindenyl)}zirconium dichloride,
rac-Dimethylsilylene-bis{1-(2,3,7-trimethyl-4-i-propylindenyl)}zirconium dichloride,
rac-Dimethylsilylene-bis{1-(2,3,7-trimethyl-4-n-butylindenyl)}zirconium dichloride,
rac-Dimethylsilylene-bis{1-(2,3,7-trimethyl-4-sec-butylindenyl)}zirconium dichloride,
rac-Dimethylsilylene-bis{1-(2,3,7-trimethyl-4-t-butylindenyl)}zirconium dichloride,
rac-Dimethylsilylene-bis{1-(2,3,7-trimethyl-4-n-pentylindenyl)}zirconium dichloride,
rac-Dimethylsilylene-bis{1-(2,3,7-trimethyl-4-n-hexylindenyl)}zirconium dichloride,
rac-Dimethylsilylene-bis{1-(2,3,7-trimethyl-4-trimethylsilylmethylindenyl))zirconium dichloride,
rac-Dimethylsilylene-bis{1-(2,3,7-trimethyl-4-trimethylsiloxymethylindenyl)}zirconium dichloride,
rac-Dimethylsilylene-bis{1-(2,3,7-trimethyl-4-chloromethylindenyl)}zirconium dichloride,
rac-Diethylsilylene-bis{1-(2,3,7-trimethyl-4-i-propylindenyl)}zirconium dichloride,
rac-Di(i-propyl)silylene-bis{1-(2,3,7-trimethyl-4-i-propylindenyl)}zirconium dichloride,
rac-Di(n-butyl)silylene-bis{1-(2,3,7-trimethyl-4-i-propylindenyl)}zirconium dichloride,
rac-Di(cyclohexyl)silylene-bis{1-(2,3,7-trimethyl-4-i-propylindenyl)}zirconium dichloride,
rac-Methylphenylsilylene-bis{1-(2,3,7-trimethyl-4-i-propylindenyl)}zirconium dichloride,
rac-Methylphenylsilylene-bis{1-(2,3,7-trimethyl-4-t-butylindenyl)}zirconium dichloride,
rac-Diphenylsilylene-bis{1-(2,3,7-trimethyl-4-t-butylindenyl)}zirconium dichloride,
rac-Diphenylsilylene-bis{1-(2,3,7-trimethyl-4-i-propylindenyl)}zirconium dichloride,
rac-Diphenylsilylene-bis{1-(2,3,7-trimethyl-4-ethylindenyl)}zirconium dichloride,
rac-Di(p-tolyl)silylene-bis{1-(2,3,7-trimethyl-4-i-propylindenyl)}zirconium dichloride,
rac-Di(p-chlorophenyl)silylene-bis{1-(2,3,7-trimethyl-4-i-propylindenyl)}zirconium dichloride,
rac-Dimethylsilylene-bis{1-(2-methyl-4-i-propyl-7-methylindenyl)}zirconium dimethyl,
rac-Dimethylsilylene-bis{1-(2-methyl-4-i-propyl-7-methylindenyl)}zirconium methylchloride,
rac-Dimethylsilylene-bis{1-(2-methyl-3-methyl-4-i-propyl-7-methylindenyl)}zirconium dichloride,
rac-Dimethylsilylene-bis{1-(2-ethyl-4-i-propyl-7-methylindenyl)}zirconium dichloride,

Of these, particularly preferred are compounds having a branched alkyl group such as i-propyl, sec-butyl or tert butyl at the 4-position.

In the present invention, a racemic modification of the Group IVB transition metal compound represented by the formula (I) is generally used as the catalyst component, but R type or S type is also employable.

The Group IVB transition metal compound represented by the formula (I) can be synthesized from indene derivatives in accordance with conventionally known processes, for example, a process described in Japanese Patent Laid-Open Publication No. 268307/1992.

Next, the Group IVB transition metal compound represented by the formula (II) is described.

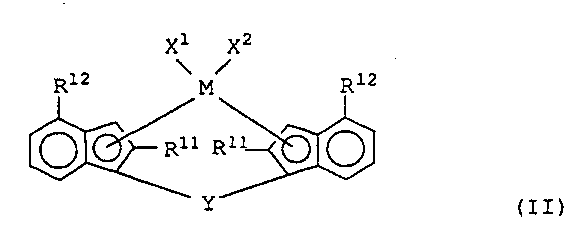

In the formula (II), M is zirconium.

R¹¹'s may be the same or different from each other, and are each an alkyl group of 1 to 4 carbon atoms. Examples of alkyl groups are methyl, ethyl, n-propyl, isopropyl, n-butyl, isobutyl, sec-butyl, tert-butyl.

Of these, preferred are alkyl groups wherein the carbon atom bonded to the indenyl group is a primary carbon atom; and particularly preferred are methyl and ethyl.

R¹²'s may be the same or different from each other, and are each an aryl group of 6 to 10 carbon atoms.

Examples of the aryl groups of 6 to 10 carbon atoms include phenyl, α-naphthyl, β-naphthyl, tetrahydronaphthyl, indanyl and biphenylyl. Of these, preferred are phenyl, and naphthyl.

These aryl groups may be substituted with halogen atoms, or hydrocarbon groups of 1 to 20 carbon atoms.

Examples of the halogen atoms and the hydrocarbon groups of 1 to 20 carbon atoms include the same atoms and groups as in the aforesaid formula (I).

Examples of the organosilyl groups include trimethylsilyl, triethylsilyl and triphenylsilyl.

X¹ and X² may be the same or different from each other, and have the same meanings as defined in the aforesaid formula (I).

Y has the same meaning as defined in the aforesaid formula (I).

Listed below are examples of the transition metal compounds represented by the formula (II).
rac-Dimethylsilylene-bis{1-(2-methyl-4-phenylindenyl))zirconium dichloride,
rac-Dimethylsilylene-bis{1-(2-methyl-4-(α-naphthyl)indenyl))zirconium dichloride,
rac-Dimethylsilylene-bis{1-(2-methyl-4-(β-naphthyl)indenyl)}zirconium dichloride,
rac-Dimethylsilylene-bis{1-(2-methyl-4-(p-fluorophenyl)indenyl)}zirconium dichloride,
rac-Dimethylsilylene-bis{1-(2-methyl-4-(pentafluorophenyl)indenyl)}zirconium dichloride,
rac-Dimethylsilylene-bis{1-(2-methyl-4-(p-chlorophenyl)indenyl)}zirconium dichloride,
rac-Dimethylsilylene-bis{1-(2-methyl-4-(m-chlorophenyl)indenyl)}zirconium dichloride,
rac-Dimethylsilylene-bis{1-(2-methyl-4-(o-chlorophenyl)indenyl)}zirconium dichloride,
rac-Dimethylsilylene-bis{1-(2-methyl-4-(o,p-dichlorophenyl)phenyl-1-indenyl)}zirconium dichloride,
rac-Dimethylsilylene-bis{1-(2-methyl-4-(p-bromophenyl)indenyl)}zirconium dichloride,
rac-Dimethylsilylene-bis{1-(2-methyl-4-(p-tolyl)indenyl)}zirconium dichloride,
rac-Dimethylsilylene-bis{1-(2-methyl-4-(m-tolyl)indenyl)}zirconium dichloride,
rac-Dimethylsilylene-bis{1-(2-methyl-4-(o-tolyl)indenyl)}zirconium dichloride,
rac-Dimethylsilylene-bis{1-(2-methyl-4-(o,o'-dimethylphenyl)-1-indenyl)}zirconium dichloride,
rac-Dimethylsilylene-bis{1-(2-methyl-4-(p-ethylphenyl)indenyl))zirconium dichloride,
rac-Dimethylsilylene-bis{1-(2-methyl-4-(p-i-propylphenyl)indenyl)}zirconium dichloride,
rac-Dimethylsilylene-bis{1-(2-methyl-4-(p-benzylphenyl)indenyl)}zirconium dichloride,
rac-Dimethylsilylene-bis{1-(2-methyl-4-(p-biphenyl)indenyl)}zirconium dichloride,
rac-Dimethylsilylene-bis{1-(2-methyl-4-(m-biphenyl)indenyl)}zirconium dichloride,
rac-Diethylsilylene-bis{1-(2-methyl-4-phenylindenyl)}zirconium dichloride,
rac-Di-(i-propyl)silylene-bis{1-(2-methyl-4-phenylindenyl)}zirconium dichloride,
rac-Di-(n-butyl)silylene-bis{1-(2-methyl-4-phenylindenyl)}zirconium dichloride,
rac-Dicyclohexylsilylene-bis{1-(2-methyl-4-phenylindenyl)}zirconium dichloride,
rac-Methylphenylsilylene-bis{1-(2-methyl-4-phenylindenyl)}zirconium dichloride,
rac-Diphenylsilylene-bis{1-(2-methyl-4-phenylindenyl)}zirconium dichloride,
rac-Di(p-tolyl)silylene-bis{1-(2-methyl-4-phenylindenyl)}zirconium dichloride,
rac-Di(p-chlorophenyl)silylene-bis{1-(2-methyl-4-phenylindenyl)}zirconium dichloride,
rac-Dimethylsilylene-bis{1-(2-methyl-4-phenylindenyl)}zirconium dibromide,
rac-Dimethylsilylene-bis{1-(2-methyl-4-phenylindenyl)}zirconium dimethyl,
rac-Dimethylsilylene-bis(1-(2-methyl-4-phenylindenyl)}zirconium methylchloride,
rac-Dimethylsilylene-bis{1-(2-ethyl-4-phenylindenyl)}zirconium dichloride,
rac-Dimethylsilylene-bis{1-(2-ethyl-4-(α-naphthyl)indenyl)}zirconium dichloride,
rac-Dimethylsilylene-bis{1-(2-ethyl-4-(β-naphthyl)indenyl)}zirconium dichloride,
rac-Dimethylsilylene-bis{1-(2-ethyl-4-(2-methyl-1-naphthyl)indenyl)}zirconium dichloride,
rac-Dimethylsilylene-bis{1-(2-ethyl-4-(o-methylphenyl)indenyl)}zirconium dichloride,
rac-Dimethylsilylene-bis{1-(2-ethyl-4-(m-methylphenyl)indenyl)}zirconium dichloride,
rac-Dimethylsilylene-bis{1-(2-ethyl-4-(p-methylphenyl)indenyl)}zirconium dichloride,
rac-Dimethylsilylene-bis{1-(2-ethyl-4-(2,3-dimethylphenyl)indenyl)}zirconium dichloride,
rac-Dimethylsilylene-bis{1-(2-ethyl-4-(2,4-dimethylphenyl)indenyl)}zirconium dichloride,
rac-Dimethylsilylene-bis{1-(2-ethyl-4-(2,5-dimethylphenyl)indenyl)}zirconium dichloride,
rac-Dimethylsilylene-bis{1-(2-ethyl-4-(2,4,6-trimethylphenyl)indenyl)}zirconium dichloride,
rac-Dimethylsilylene-bis{1-(2-ethyl-4-(o-chlorophenyl)indenyl)}zirconium dichloride,
rac-Dimethylsilylene-bis{1-(2-ethyl-4-(m-chlorophenyl)indenyl)}zirconium dichloride,
rac-Dimethylsilylene-bis{1-(2-ethyl-4-(p-chlorophenyl)indenyl))zirconium dichloride,
rac-Dimethylsilylene-bis{1-(2-ethyl-4-(2,3-dichlorophenyl)indenyl)}zirconium dichloride,
rac-Dimethylsilylene-bis{1-(2-ethyl-4-(2,6-dichlorophenyl)indenyl)}zirconium dichloride,
rac-Dimethylsilylene-bis{1-(2-ethyl-4-(3,5-dichlorophenyl)indenyl)}zirconium dichloride,
rac-Dimethylsilylene-bis{1-(2-ethyl-4-(2-bromophenyl)indenyl)}zirconium dichloride,
rac-Dimethylsilylene-bis{1-(2-ethyl-4-(3-bromophenyl)indenyl)}zirconium dichloride,
rac-Dimethylsilylene-bis{1-(2-ethyl-4-(4-bromophenyl)indenyl)}zirconium dichloride,
rac-Dimethylsilylene-bis{1-(2-ethyl-4-(4-biphenylyl)indenyl)}zirconium dichloride,
rac-Dimethylsilylene-bis{1-(2-n-propyl-4-phenylindenyl)}zirconium dichloride,
rac-Dimethylsilylene-bis{1-(2-n-propyl-4-(α-naphthyl)indenyl)}zirconium dichloride,
rac-Dimethylsilylene-bis{1-(2-n-propyl-4-(β-naphthyl)indenyl)}zirconium dichloride,
rac-Dimethylsilylene-bis{1-(2-n-propyl-4-(2-methyl-1-naphthyl)indenyl)}zirconium dichloride,
rac-Dimethylsilylene-bis{1-(2-i-propyl-4-phenylindenyl)}zirconium dichloride,
rac-Dimethylsilylene-bis{1-(2-i-propyl-4-(α-naphthyl)indenyl)}zirconium dichloride,
rac-Dimethylsilylene-bis{1-(2-i-propyl-4-(β-naphthyl)indenyl)}zirconium dichloride,
rac-Dimethylsilylene-bis{1-(2-i-propyl-4-(8-methyl-9-naphthyl)indenyl)}zirconium dichloride,
rac-Dimethylsilylene-bis{1-(2-s-butyl-4-phenylindenyl)}zirconium dichloride,
rac-Dimethylsilylene-bis{1-(2-s-butyl-4-(α-naphthyl)indenyl)}zirconium dichloride,
rac-Dimethylsilylene-bis{1-(2-s-butyl-4-(β-naphthyl)indenyl)}zirconium dichloride,
rac-Dimethylsilylene-bis{1-(2-s-butyl-4-(2-methyl-1-naphthyl)indenyl)}zirconium dichloride,
rac-Dimethylsilylene-bis{1-(2-n-butyl-4-phenylindenyl)}zirconium dichloride,
rac-Dimethylsilylene-bis{1-(2-n-butyl-4-(α-naphthyl)indenyl)}zirconium dichloride,
rac-Dimethylsilylene-bis{1-(2-n-butyl-4-(β-naphthyl)indenyl)}zirconium dichloride,
rac-Dimethylsilylene-bis{1-(2-n-butyl-4-(2-methyl-1-naphthyl)indenyl)}zirconium dichloride,
rac-Dimethylsilylene-bis{1-(2-i-butyl-4-phenylindenyl)}zirconium dichloride,
rac-Dimethylsilylene-bis{1-(2-i-butyl-4-(α-naphthyl)indenyl)}zirconium dichloride,
rac-Dimethylsilylene-bis{1-(2-i-butyl-4-(β-naphthyl)indenyl)}zirconium dichloride,
rac-Dimethylsilylene-bis{1-(2-i-butyl-4-(2-methyl-1-naphthyl)indenyl)}zirconium dichloride,
rac-Methylphenylsilylene-bis(1-(2-ethyl-4-phenylindenyl)}zirconium dichloride,
rac-Methylphenylsilylene-bis(1-(2-ethyl-4-(α-naphthyl)indenyl)}zirconium dichloride,
rac-Diphenylsilylene-bis{1-(2-ethyl-4-phenylindenyl)}zirconium dichloride,
rac-Diphenylsilylene-bis{1-(2-ethyl-4-(α-naphthyl)indenyl)}zirconium dichloride,
rac-Diphenylsilylene-bis{1-(2-ethyl-4-(4-biphenylyl)indenyl)}zirconium dichloride,

In the present invention, a racemic modification of the Group IVB transition metal compound represented by the formula (II) is generally used as the olefin polymerization catalyst component, but R type or S type is also employable.

The Group IVB transition metal compound represented by the formula (II) can be prepared in accordance with "Journal of Organometallic Chem." 288, 1985, pp 63 - 67 and European Patent Application No. 0,320,762 (Specification and Examples).

When a compound of the formula (II) wherein R¹² is an aryl group is used as the Group IVB transition metal compound (A), an ethylene polymer having a long-chain branch can be prepared.

Next, the Group IVB transition metal compound represented by the formula (III) is described. The Group IVB transition metal compound represented by the formula (III) is a compound described in European Patent No. 549,900 and Canadian Patent No. 2,084,017.

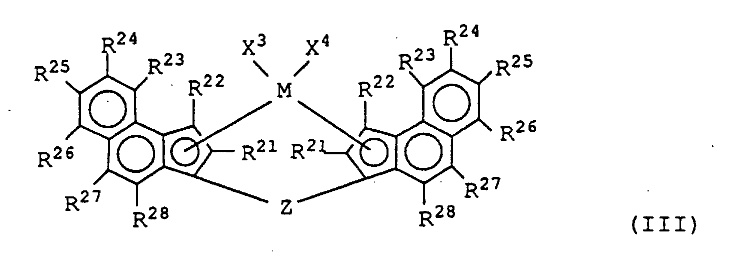

In the formula (III), M is zirconium.
R²¹'s may be the same or different from each other; and they are each an alkyl group 1 to 4 carbon atoms.
R²² to R²⁸ may be the same or different from each other; each of them is the same as R²¹, or hydrogen or at least two adjacent groups among the groups indicated by R²² to R²⁸ may form an aromatic ring or an aliphatic ring together with atoms to which said at least two groups are bonded.
X³ and X⁴ may be the same or different from each other; and they are each hydrogen, an alkyl group of 1 to
R²⁹ and R³⁰ may be the same or different from each other; and they are each methyl or phenyl
M² is silicon.

The alkyl group described above is a straight-chain or branched alkyl group; and the halogen (for halogenation) described above is fluorine, chlorine, bromine or iodine, particularly fluorine or chlorine.

Of the compounds represented by the formula (III), preferred are those wherein:
M is zirconium
R²¹'s are the same each other, and are each an alkyl group of 1 to 4 carbon atoms,
R²² to R²⁸ may be the same or different from each other, and are each hydrogen or an alkyl group of 1 to 4 carbon atoms,
X³ and X⁴ may be the same or different from each other, and are each an alkyl group of 1 to 3 carbon atoms or a halogen atom, and 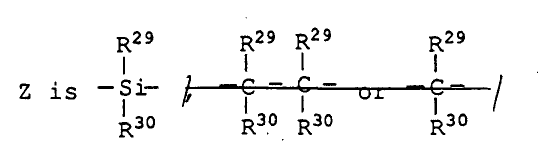
(R²⁹ and R³⁰ may be the same or different from each other, and are each methyl or phenyl).

Of such compounds, more preferred are those wherein the substituents R²² and R²⁸ are each hydrogen, and R²³ to R²⁷ are each an alkyl group of 1 to 4 carbon atoms or hydrogen.

Listed below are examples of the transition metal compounds represented by the formula (III).
rac-Dimethylsilylene-bis{1-(2-methyl-4,5-benzoindenyl)}zirconium dichloride,
rac-Dimethylsilylene-bis{1-(2-methyl-4,5-acenaphthoindenyl)}zirconium dichloride,
rac-Methylphenylsilylene-bis{1-(2-methyl-4,5-benzoindenyl)}zirconium dichloride,
rac-Methylphenylsilylene-bis{1-(2-methyl-4,5-acenaphthoindenyl)}zirconium dichloride,
rac-Dimethylsilylene-bis{1-(2,6-dimethyl-4,5-benzoindenyl)}zirconium dichloride, and
rac-Dimethylsilylene-bis{1-(2,3,6-trimethyl-4,5-acenaphthoindenyl)}zirconium dichloride.

In the present invention, the Group IVB transition metal compounds mentioned above may be used in combination of two or more kinds.

The organoaluminum oxy-compound (B-1) used in the invention may be aluminoxane conventionally known or a benzene-insoluble organoaluminum oxy-compound exemplified in Japanese Patent Laid-Open Publication No. 78687/1990.

The conventionally known aluminoxane can be prepared by, for example, the following procedures.
(1) An organoaluminum compound such as trialkylaluminum is added to a hydrocarbon medium suspension of compounds containing adsorbed water or salts containing water of crystallization, e.g., magnesium chloride hydrate, copper sulfate hydrate, aluminum sulfate hydrate, nickel sulfate hydrate or cerous chloride hydrate, so as to allow the organoaluminum compound to react with the adsorbed water or the water of crystallization.
(2) Water, ice or water vapor is allowed to directly act on an organoaluminum compound such as trialkylaluminum in a medium such as benzene, toluene, ethyl ether or tetrahydrofuran.
(3) An organotin oxide such as dimethyltin oxide or dibutyltin oxide is allowed to react with an organoaluminum compound such as trialkylaluminum in a medium such as decane, benzene or toluene.

The aluminoxane may contain a small amount of an organometallic component. Further, it is also possible that the solvent or the unreacted organoaluminum compound is distilled off from the recovered solution of aluminoxane and the remainder is redissolved in a solvent.

Examples of the organoaluminum compounds employable for preparing the aluminoxane include:
trialkylaluminums, such as trimethylaluminum, triethylaluminum, tripropylaluminum, triisopropylaluminum, tri-n-butylaluminum, triisobutylaluminum, tri-sec-butylaluminum, tri-tert-butylaluminum, tripentylaluminum, trihexylaluminum, trioctylaluminum and tridecylaluminum;
tricycloalkylaluminums, such as tricyclohexylaluminum and tricyclooctylaluminum;
dialkylaluminum halides, such as dimethylaluminum chloride, diethylaluminum chloride, diethylaluminum bromide and diisobutylaluminum chloride;
dialkylaluminum hydrides, such as diethylaluminum hydride and diisobutylaluminum hydride;
dialkylaluminum alkoxides, such as dimethylaluminum methoxide and diethylaluminum ethoxide; and
dialkylaluminum aryloxides, such as diethylaluminum phenoxide.

Of these, particularly preferred are trialkylaluminums and tricycloalkylaluminums.

Also employable as the organoaluminum compound for preparing the aluminoxane is isoprenylaluminum represented by the formula (i-C₄H₉)ₓAl_{y}(C₅H₁₀)_{z} (wherein x, y, z are each a positive number, and z ≥ 2x).

The organoaluminum compounds mentioned above may be used in combination of two or more kinds.

Examples of the solvents used for preparing the aluminoxane include:
aromatic hydrocarbons, such as benzene, toluene, xylene, cumene and cymene;
aliphatic hydrocarbons, such as pentane, hexane, heptane, octane, decane, dodecane, hexadecane and octadecane;
alicyclic hydrocarbons, such as cyclopentane, cyclohexane, cyclooctane and methylcyclopentane;
petroleum fractions, such as gasoline, kerosine and gas oil; and
halides of these aromatic, aliphatic and alicyclic hydrocarbons, particularly chlorides and bromides thereof.

Also employable are ethers such as ethyl ether and tetrahydrofuran. Of the solvents, particularly preferred are aromatic hydrocarbons.

The compound (B-2) which reacts with the Group IVB transition metal compound (A) to form an ion pair (sometimes referred to as "ionized ionic compound" hereinafter), that is used in the invention is a boron - containing compound selected from the group consisting of Lewis acid, ionic compounds, borane compounds and carborane compounds as described e.g. in National Publications of International Patent No. 501950/1989 and No. 502036/1989, Japanese Patent Laid-Open Publication No. 179005/1991, No. 179006/1991, No. 207703/1991 and No. 207704/1991, and U.S. Patent No. 5,321,106.

The Lewis acid is a boron-containing Lewis acid.

The Lewis acid which contains a boron atom is, for example, a compound represented by the following formula:

BR⁶R⁷R⁸

wherein R⁶, R⁷ and R⁸ may be the same or different from each other, and are each phenyl which may have a substituent such as fluorine, methyl or trifluoromethyl, or fluorine.

Examples of the compounds represented by the above formula include trifluoroboron, triphenylboron, tris(4-fluorophenyl)boron, tris(3,5-difluorophenyl)boron, tris(4-fluoromethylphenyl)boron, tris(pentafluorophenyl)boron, tris(p-tolyl)boron, tris(o-tolyl)boron and tris(3,5-dimethylphenyl)boron. Of these, particularly preferred is tris(pentafluorophenyl)boron.

The ionic compound used in the invention is a salt comprising a cationic compound and an anionic compound. The anion reacts with the Group IVB transition metal compound (A) to render the compound (A) cationic and to form an ion pair, thereby to stabilize the transition metal cation seed. Examples of such anions include organoboron compound anion. Preferred are anions which are relatively bulky and stabilize the transition metal cation seed. Examples of the cations include metallic cation, organometallic cation, carbonium cation, tripium cation, oxonium cation, sulfonium cation, phosphonium cation and ammonium cation. More specifically, there can be mentioned triphenylcarbenium cation, tributylammonium cation, N,N-dimethylammonium cation, ferrocenium cation, etc.

Of these ionic compounds containing a boron compound as anion, and examples thereof include:
trialkyl-substituted ammonium salts, such as triethylammoniumtetra(phenyl)boron, tripropylammoniumtetra(phenyl)boron, tri(n-butyl)ammoniumtetra(phenyl)boron, trimethylammoniumtetra(p-tolyl)boron, trimethylammoniumtetra(o-tolyl)boron, tributylammoniumtetra(pentafluorophenyl)boron, tripropylammoniumtetra(o,p-dimethylphenyl)boron, tributylammoniumtetra(m,m-dimethylphenyl)boron, tributylammoniumtetra(p-trifluoromethylphenyl)boron, tri(n-butyl)ammoniumtetra(o-tolyl)boron and tri(n-butyl)ammoniumtetra(4-fluorophenyl)boron;
N,N,-dialkylanilinium salts, such as N,N-dimethylaniliniumtetra(phenyl)boron, N,N-diethylaniliniumtetra(phenyl)boron and N,N-2,4,6-pentamethylaniliniumtetra(phenyl)boron;
dialkylammonium salts, such as di(n-propyl)ammoniumtetra(pentafluorophenyl)boron and dicyclohexylammoniumtetra(phenyl)boron; and
triarylphosphonium salts, such as triphenylphosphoniumtetra(phenyl)boron, tri(methylphenyl)phosphoniumtetra(phenyl)boron and tri(dimethylphenyl)phosphoniumtetra(phenyl)boron.

As the ionic compounds containing a boron atom, triphenylcarbeniumtetrakis(pentafluorophenyl)borate, N,N-dimethylaniliniumtetrakis(pentafluorophenyl)borate and ferroceniumtetra(pentafluorophenyl)borate are also employable in the invention.

Further, the following salts of anions are also employable. (In the ionic compounds enumerated below, the counter ion is tri(n-butyl)ammonium, but the counter ion is in no way limited thereto.)

That is, there can be mentioned bis[tri(n-butyl)ammonium]nonaborate, bis[tri(n-butyl)ammonium]decaborate, bis[tri (n-butyl)ammonium]undecaborate, bis[tri(n-butyl)ammonium]dodecaborate, bis[tri(n-butyl)ammonium]decachlorodecaborate, bis[tri(n-butyl)ammonium]dodecachlorododecaborate, tri(n-butyl)ammonium-1-carbadecaborate, tri(n-butyl)ammonium-1-carbaundecaborate, tri(n-butyl)ammonium-1-carbadodecaborate, tri(n-butyl)ammonium-1-trimethylsilyl-1-carbadecaborate and tri(n-butyl)ammoniumbromo-1-carbadodecaborate.

Moreover, borane compounds and carborane compounds are also employable. These compounds are used as the Lewis acid or the ionic compounds.

Examples of the borane and carborane compounds include:
borane and carborane complex compounds and salts of carborane anions, such as decaborane(14), 7,8-dicarbaundecaborane(13), 2,7-dicarbaundecaborane(13), undecahydride-7,8-dimethyl-7,8-dicarbaundecaborane, dodecahydride-11-methyl-2,7-dicarbaundecaborane, tri(n-butyl)ammonium-6-carbadecaborate(14), tri(n-butyl)ammonium-6-carbadecaborate(12), tri(n-butyl)ammonium-7-carbaundecaborate(13), tri(n-butyl)ammonium-7,8-dicarbaundecaborate(12), tri(n-butyl)ammonium-2,9-dicarbaundecaborate(12), tri(n-butyl)ammoniumdodecahydride-8-methyl-7,9-dicarbaundecaborate, tri(n-butyl)ammoniumundecahydride-8-ethyl-7,9-dicarbaundecaborate, tri(n-butyl)ammoniumundecahydride-8-butyl-7,9-dicarbaundecaborate, tri(n-butyl)ammoniumundecahydride-8-allyl-7,9-dicarbaundecaborate, tri(n-butyl)ammoniumundecahydride-9-trimethylsilyl-7,8-dicarbaundecaborate and tri(n-butyl)ammoniumundecahydride-4,6-dibromo-7-carbaundecaborate; and
carboranes and salts of carboranes, such as 4-carbanonaborane(14), 1,3-dicarbanonaborane(13), 6,9-dicarbadecaborane(14), dodecahydride-1-phenyl-1,3-dicarbanonaborane, dodecahydride-1-methyl-1,3-dicarbanonaborane and undecahydride-1,3-dimethyl-1,3-dicarbanonaborane.

Furthermore, the following compounds are also employable. (In the ionic compounds enumerated below, the counter ion is tri(n-butyl)ammonium, but the counter ion is in no way limited thereto.)

That is, there can be mentioned salts of metallic carboranes and metallic borane anions, such as tri(n-butyl) ammoniumbis (nonahydride-1,3-dicarbanonaborate)cobaltate(III), tri(n-butyl)ammoniumbis(undecahydride-7,8-dicarbaundecaborate)ferrate(III), tri(n-butyl)ammoniumbis(undecahydride-7,8-dicarbaundecaborate)cobaltate(III), tri(n-butyl)ammoniumbis(undecahydride-7,8-dicarbaundecaborate)nickelate(III), tri(n-butyl) ammoniumbis (undecahydride-7,8-dicarbaundecaborate)cuprate(III), tri(n-butyl)ammoniumbis(undecahydride-7,8-dicarbaundecaborate)aurate(III), tri(n-butyl)ammoniumbis(nonahydride-7,8-dimethyl-7,8-dicarbaundecaborate)ferrate(III), tri(n-butyl)ammoniumbis(nonahydride-7,8-dimethyl-7,8-dicarbaundecaborate)chromate(III), tri(n-butyl)ammoniumbis(tribromooctahydride-7,8-dicarbaundecaborate)cobaltate(III), tri(n-butyl)ammoniumbis(dodecahydridedicarbadodecaborate)-cobaltate(III), bis[tri(n-butyl)ammonium]bis(dodecahydridedodecaborate)-nickelate(III), tris[tri(n-butyl) ammonium] bis (undecahydride-7-carbaundecaborate)chromate(III), bis[tri(n-butyl)ammonium]bis(undecahydride-7-carbaundecaborate)manganate(IV), bis[tri(n-butyl)ammonium]bis(undecahydride-7-carbaundecaborate)cobaltate(III) and bis[tri(n-butyl) ammonium]bis (undecahydride-7-carbaundecaborate)nickelate(IV).

The compounds (B-2) which react with the Group IVB transition metal compound (A) to form an ion pair can be used in combination of two or more kinds.

The organoaluminum compound (C) used in the invention can be represented by, for example, the following formula (i) :

R^{a} ₙAlX₃₋ₙ (i)

wherein R^{a} is a hydrocarbon group of 1 to 12 carbon atoms, X is a halogen atom or hydrogen, and n is 1 to 3.

In the formula (i), R^{a} is a hydrocarbon group of 1 to 12 carbon atoms, e.g., an alkyl group, a cycloalkyl group or an aryl group. Particular examples thereof include methyl, ethyl, n-propyl, isopropyl, isobutyl, pentyl, hexyl, octyl, cyclopentyl, cyclohexyl, phenyl and tolyl.

Examples of such organoaluminum compounds include:
trialkylaluminums, such as trimethylaluminum, triethylaluminum, triisopropylaluminum, triisobutylaluminum, trioctylaluminum and tri-2-ethylhexylaluminum;
alkenylaluminums, such as isoprenylaluminum;
dialkylaluminum halides, such as dimethylaluminum chloride, diethylaluminum chloride, diisopropylaluminum chloride, diisobutylaluminum chloride and dimethylaluminum bromide;
alkylaluminum sesquihalides, such as methylaluminum sesquichloride, ethylaluminum sesquichloride, isopropylaluminum sesquichloride, butylaluminum sesquichloride and ethylaluminum sesquibromide;
alkylaluminum dihalides, such as methylaluminum dichloride, ethylaluminum dichloride, isopropylaluminum dichloride and ethylaluminum dibromide; and
alkylaluminum hydrides, such as diethylaluminum hydride and diisobutylaluminum hydride.

Also employable as the organoaluminum compound (C) is a compound represented by the following formula (ii):

R^{a} ₙAlY₃₋ₙ (ii)

wherein R^{a} is the same as above,
Y is -OR^{b} group, -OSiR^{c}₃ group, -OAlR^{d}₂ group, -NR^{e}₂ group, -SiR^{f}₃ group or -N(R^{g})AlR^{h}₂ group,
n is 1 or 2,
R^{b}, R^{c}, R^{d} and R^{h} are each methyl, ethyl, isopropyl, isobutyl, cyclohexyl, phenyl or the like,
R^{e} is hydrogen, methyl, ethyl, isopropyl, phenyl, trimethylsilyl or the like, and
R^{f} and R^{g} are each methyl, ethyl or the like.

Examples of such organoaluminum compounds include:
(i) compounds of the formula R^{a}ₙAl(OR^{b})₃₋ₙ, e.g., dimethylaluminum methoxide, diethylaluminum ethoxide and diisobutylaluminum methoxide;
(ii) compounds of the formula R^{a}ₙAl(OSiR^{c}₃)₃₋ₙ, e.g., (C₂H₅)₂Al(OSi(CH₃)₃), (iso-C₄H₉)₂Al(OSi(CH₃)₃) and (iso-C₄H₉)₂Al(OSi (C₂H₅)₃);
(iii) compounds of the formula R^{a}ₙAl(OAlR^{d}₂)₃₋ₙ, e.g., (C₂H₅)₂Al(OAl(C₂H₅)₂) and (iso-C₄H₉)₂Al(OAl(iso-C₄H₉)₂);
(iv) compounds of the formula R^{a}ₙAl(NR^{e}₂)₃₋ₙ, e.g., (CH₃)₂Al(N(C₂H₅)₂), (C₂H₅)₂Al(NH(CH₃)), (CH₃)₂Al(NH(C₂H₅)), (C₂H₅)₂Al[N(Si(CH₃)₃)₂] and (iso-C₄H₉)₂Al[N(Si(CH₃)₃)₂]; and
(v) compounds of the formula R^{a}ₙAl(SiR^{f}₃)₃₋ₙ, e.g., (iso-C₄H₉)₂Al(Si (CH₃)₃).

Of these, preferred are organoaluminum compounds of the formulas R^{a}₃Al, R^{a}ₙAl (OR^{b})₃₋ₙ and R^{a}ₙAl(OAlR^{d}₂)₃₋ₙ, and particularly preferred are compounds of said formulas wherein R^{a} is an isoalkyl group and n is 2. The organoaluminum compounds mentioned above may be used in combination of two or more kinds.

In the present invention, homopolymerization of ethylene or copolymerization of ethylene and an α-olefin of 3 or more carbon atoms is carried out in the presence of the catalyst formed from (A) the group IVB transition metal compound and (B) the organoaluminum oxy-compound and/or the ionized ionic compound, and if necessary, (C) the organoaluminum compound.

In each of Figs. 1 to 3, steps for preparing the olefin polymerization catalyst employable in the invention are shown.

Examples of the α-olefins of 3 or more carbon atoms include propylene, 1-butene, 1-pentene, 1-hexene, 4-methyl-1-pentene, 3-methyl-1-pentene, 1-heptene, 1-octene, 1-nonene, 1-decene, 1-undecene, 1-dodecene, 1-tetradecene, 1-hexadecene and 1-octadecene.

Also employable are cyclopentene, cycloheptene, norbornene, 5-methyl-2-norbornene, tetracyclododecene, 2-methyl-1,4,5,8-dimethano-1,2,3,4,4a,5,8,8a-octahydronaphthalene, styrene and vinylcyclohexane.

Together with the olefins, polyenes such as butadiene, isoprene, 1,4-hexadiene, dicyclopentadiene and 5-ethylidene-2-norbornene can be copolymerized.

Of these, propylene, 1-butene, 1-hexene and 1-octene are preferably employed.

It is preferred to carry out homopolymerization of ethylene or copolymerization of ethylene and the α-olefin of 3 or more carbon atoms in an inert hydrocarbon solvent. Examples of such inert hydrocarbon media include aliphatic hydrocarbons, such as propane, butane, pentane, hexane, heptane, octane, decane, dodecane and kerosine; alicyclic hydrocarbons, such as cycopentane, cyclohexane and methylcyclopentane; aromatic hydrocarbons such as benzene, toluene and xylene; and halogenated hydrocarbons, such as ethylene chloride, chlorobenzene and dichloromethane. These hydrocarbons may be used singly or in combination of two or more kinds.

In the present invention, the Group IVB transition metal compound (A) is used in an amount of usually about 0.00005 to 0.1 mmol, preferably about 0.0001 to 0.05 mmol, in terms of the transition metal atom, based on 1 liter of the polymerization solution.

The organoaluminum oxy-compound (B-1) is used in such an amount that the amount of the aluminum atom becomes usually about 1 to 10,000 mol, preferably 10 to 5,000 mol, based on 1 mol of the transition metal atom in the Group IVB transition metal compound (A).

The ionized ionic compound (B-2) is used in such an amount that the amount of the boron atom becomes usually 0.5 to 20 mol, preferably 1 to 10 mol, based on 1 mol of the transition metal atom in the Group IVB transition metal compound (A).

The organoaluminum compound (C) is used if necessary, and the amount thereof is in the range of usually about 0 to 200 mol, preferably about 0 to 100 mol, based on 1 mol of the aluminum atom in the organoaluminum oxy-compound (B-1). Further, the amount of the compound (C) optionally used is in the range of usually about 0 to 1,000 mol, preferably about 0 to 500 mol, based on 1 mol of the boron atom in the ionized ionic compound (B-2).

In the preparation of an ethylene polymer according to the invention, the Group IVB transition metal compound (A), the organoaluminum oxy-compound and/or the ionized ionic compound (B) and the organoaluminum compound (C), which are used to form the catalyst, may be each independently fed to the polymerization reactor. Or, it is possible that the Group IVB transition metal compound (A), the organoaluminum oxy-compound and/or the ionized ionic compound (B) and the organoaluminum compound (C) are blended outside the polymerization reactor to prepare a catalyst, followed by subjecting the catalyst to the copolymerization reaction.

The Group IVB transition metal compound (A), the organoaluminum oxy-compound and/or the ionized ionic compound (B) and the organoaluminum compound (C) can be contacted at a temperature of usually -100 to 200 °C, preferably -70 to 100 °C.

In the preparation of the catalyst, a hydrocarbon medium inert to the catalyst components can be employed. Examples of the inert hydrocarbon media are identical with those used in the polymerization.

According to the process of the invention, the polymerization temperature is 120 to 200 °C.

In the present invention, ethylene is (co)polymerized at a temperature of not lower than 120°C in the presence of the above-described catalyst, and therefore an ethylene (co)polymer having a high molecular weight and a high comonomer content can be obtained. Additionally, even if the comonomer concentration is low, an ethylene copolymer having a high comonomer content can be obtained.

When the polymerization temperature is not lower than 80 °C, removal of heat is readily carried out and the size of the heat removal device can be made smaller. If the same-sized heat removal device is used, the productivity can be improved. Further, because of the high-temperature polymerization, the solution viscosity does not become so high and the stirring power can be reduced even if the polymer concentration is increased. As a result, the productivity can be enhanced.

In the invention, the polymerization pressure is in the range of atmospheric pressure to 100 kg/cm², preferably atmospheric pressure to 50 kg/cm². The residence time (polymerization time) is in the range of usually 0.1 to 4 hours, preferably 0.2 to 2 hours.

The polymerization can be carried out by any of batchwise, semi-continuous and continuous processes, but the continuous process is preferably employed. The polymerization can be carried out in two or more stages under different reaction conditions.

The molecular weight of the ethylene polymer can be modified by varying the polymerization conditions such as polymerization temperature or by controlling the amount of hydrogen (molecular weight modifier).

The product immediately after the polymerization is recovered from the polymerization solution by a separation-recovery method conventionally known and dried to obtain an ethylene polymer.

The ethylene polymer obtained as above has an ethylene/α-olefin component ratio of usually 55/45 to 98/2, preferably 60/40 to 95/5.

The melt flow rate (MFR) of the ethylene polymer is in the range of usually 0.01 to 200 g/10 min, preferably 0.03 to 100 g/10 min, and the density thereof is in the range of usually 0.85 to 0.95 g/cm³, preferably 0.86 to 0.94 g/cm³.

The ethylene polymer obtained by the above process is characterized by having a narrow molecular weight distribution and a narrow composition distribution.

### EFFECT OF THE INVENTION

In the process for preparing an ethylene polymer according to the invention, ethylene is (co)polymerized in a solution at a temperature of not lower than 120°C in the presence of a catalyst comprising:
components (A), (B-1), (B-2) and (C) as specified in the appended claim 1.

Therefore, an ethylene (co)polymer having a high molecular weight can be obtained. According to the process of the invention, further, an ethylene copolymer having a high content of a comonomer can be obtained.

Since the polymerization can be carried out at a temperature higher than those in the conventional processes, a small-sized heat removal device can be used. Consequently, the equipment cost can be decreased and the residence time can be shortened.

### EXAMPLE

The present invention will be further described with reference to the following examples, but it should be construed that the invention is in no way limited to those examples.

In the examples, the following compounds a to h are used as the Group IVB transition metal compounds.

Compound a: rac dimethylsilylene-bis{1-(2-methyl-4-isopropyl-7-methylindenyl)}zirconium dichloride

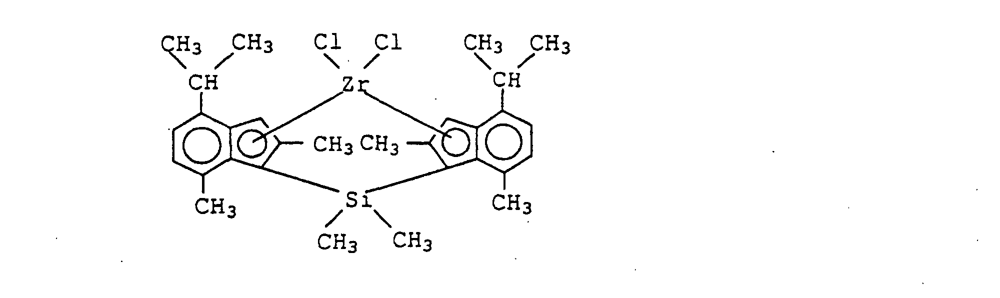

Compound b: rac dimethylsilylene-bis{1-(2-methyl-4,6-diisopropylindenyl)}zirconium dichloride (Comparative compound)

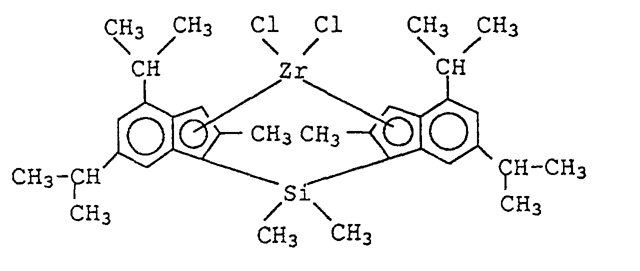

Compound c: rac dimethylsilylene-bis{1-(2-methyl-4,5-benzoindenyl)}zirconium dichloride

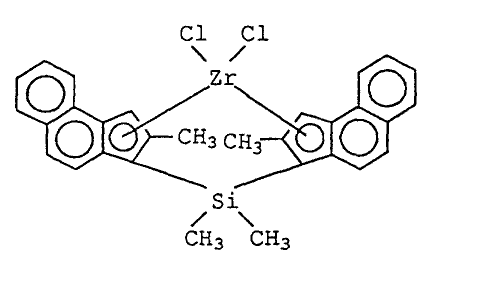

Compound d: rac dimethylsilylene-bis(2-methyl-4,5-acenaphthocyclopentadienyl) zirconium dichloride

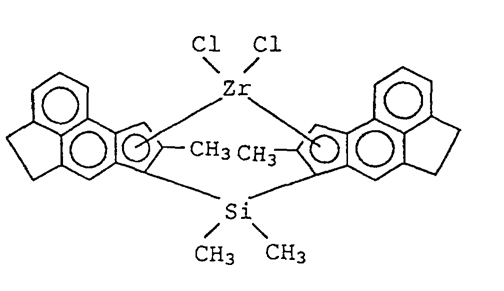

Compound e: rac dimethylsilylene-bis{1-(2-methyl-4-phenylindenyl)}zirconium dichloride

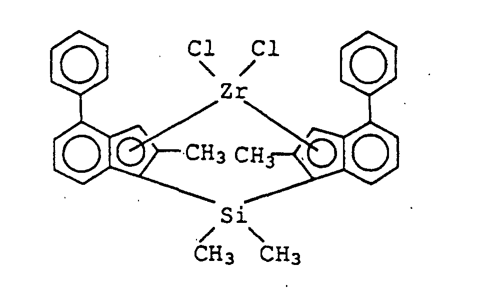

Compound f: rac dimethylsilylene-bis{1-(2-methylindenyl) }zirconium dichloride (Comparative)

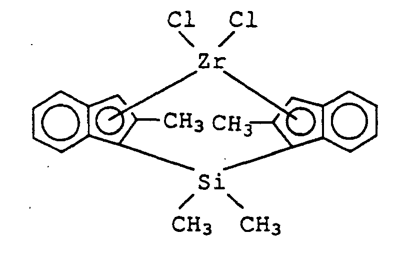

Compound g: bis(1,3-dimethylcyclopentadienyl)zirconium dichloride (Comparative)

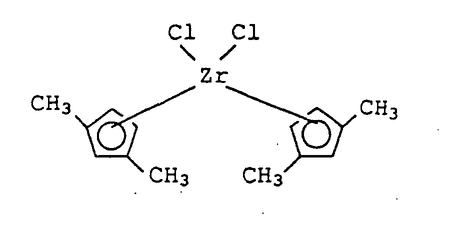

Compound h: rac dimethylsilylene-bis(1-indenyl) zirconium dichloride (Comparative)

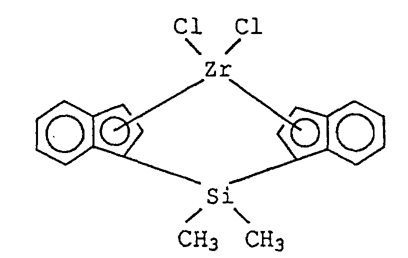

### Example 1

### Preparation of catalyst solution

To a glass flask thoroughly purged with nitrogen, 5.1 mg of rac-dimethylsilylene-bis{1-(2-methyl-4-isopropyl-7-methylindenyl)}zirconium dichloride (compound a) was introduced. Then, 1.57 ml of a toluene solution of methylaluminoxane (Al: 1.1 mol/l) and 2.76 ml of toluene were added, to obtain a catalyst solution.

### Polymerization

To a 2-liter stainless steel autoclave thoroughly purged with nitrogen, 600 ml of hexane and 400 ml of 1-octene were introduced. The temperature of the system was elevated to 130 °C. Then, 1 mmol of triisobutylaluminum and 0.5 ml (0.001 mmol in terms of Zr) of the catalyst solution prepared above were injected into the autoclave with ethylene to initiate polymerization. Thereafter, only ethylene was continuously fed to keep the total pressure at 30 kg/cm²-G, and the polymerization was continued at 140 °C for 30 minutes. After a small amount of ethanol was added to the system to terminate the polymerization, the system was purged of the unreacted ethylene. The resulting polymer solution was introduced into a large excess of methanol to precipitate a polymer. The polymer was recovered by filtration and dried overnight at 130 °C under reduced pressure. Thus, an ethylene-1-octene polymer having MFR of 0.72 g/10 min and a density of 0.893 g/cm³ was obtained in an yield of 54.5 g.

### Examples 2 - 18

An ethylene polymer was prepared in the same manner as in Example 1 except that the polymerization conditions were varied to those shown in Table 1. The results are set forth in Table 1.

### Comparative Examples 1 and 2

An ethylene polymer was prepared in the same manner as in Example 1 except that the polymerization conditions were varied to those shown in Table 1. The results are set forth in Table 1.

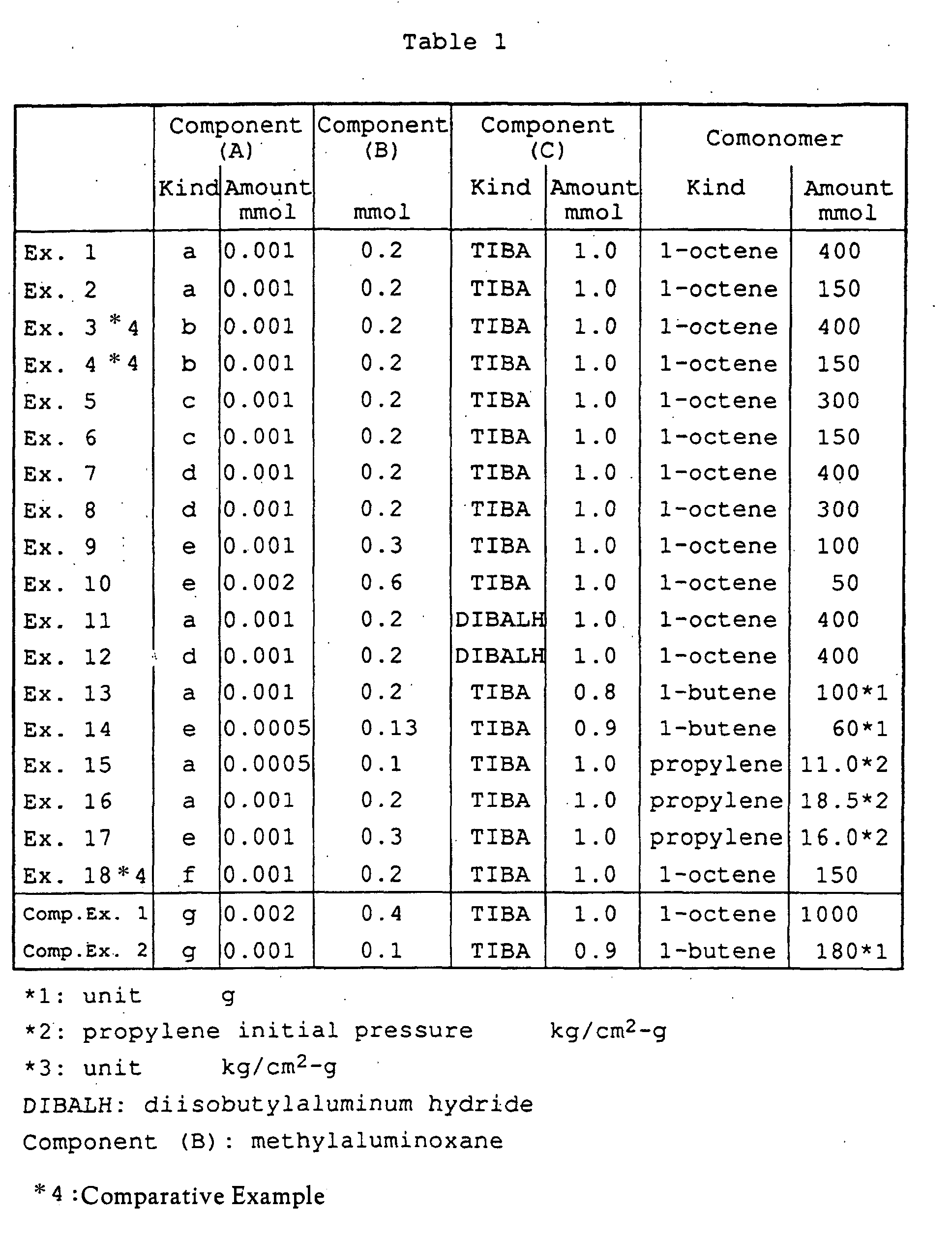

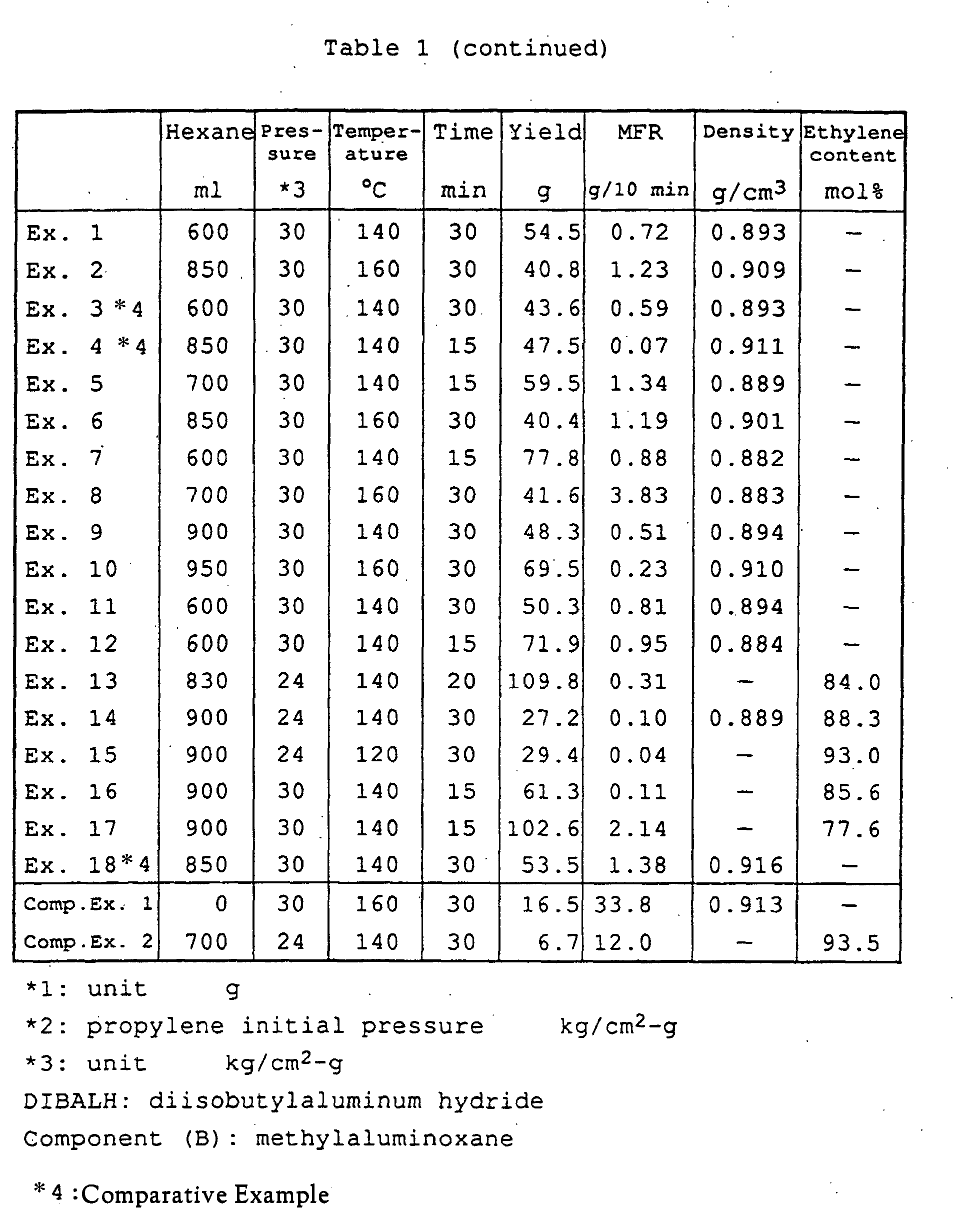

### Example 19

To a 2-liter stainless steel autoclave thoroughly purged with nitrogen, 900 ml of hexane and 100 ml of 1-octene were introduced. The temperature of the system was elevated to 120 °C. Then, 0.5 mmol of triisobutylaluminum, 0.002 mmol of a toluene solution of triphenylcarbeniumtetrakis(pentafluorophenyl)borate and 0.001 mmol of a toluene solution of rac-dimethylsilylene-bis{1-(2-methyl-4,5-benzoindenyl)}zirconium dichloride (compound c) were injected into the autoclave with ethylene to initiate polymerization. Thereafter, only ethylene was continuously fed to keep the total pressure at 30 kg/cm²-G, and the polymerization was continued at 130 °C for 30 minutes, followed by performing the same operation as in Example 1. Thus, an ethylene-1-octene copolymer having MFR of 0.68 g/10 min and a density of 0.910 g/cm³ was obtained in an yield of 64.4 g.

### Examples 20 - 22, Comparative Example 3

An ethylene polymer was prepared in the same manner as in Example 19 except that the polymerization conditions were varied to those shown in Table 2. The results are set forth in Table 2.

### Example 23

### Preparation of catalyst solution

To a glass flask thoroughly purged with nitrogen, 4.3 mg of rac-dimethylsilylene-bis{1-(2-methyl-4,5-benzoindenyl)}zirconium dichloride (compound c) was introduced. Then, 1.5 ml of a toluene solution of trimethylaluminum (Al: 0.01 mol/l) and 6 ml of toluene were added, followed by stirring at room temperature for 5 minutes, to obtain a catalyst solution.

### Polymerization

Copolymerization of ethylene and 1-octene was carried out in the same manner as in Example 19 except that 0.5 ml of the catalyst solution obtained above was used in place of the compound c. The results are set forth in Table 2.

### Example 24

A catalyst solution was prepared in the same manner as in Example 23 except that 4.7 mg of rac-dimethylsilylene-bis(2-methyl-4,5-acenaphthocyclopentadienyl)zirconium dichloride (compound d) was used in place of the compound c. Using the catalyst solution, copolymerization of ethylene and 1-octene was carried out in the same manner as in Example 23. The results are set forth in Table 2.

### Example 25

### Preparation of catalyst solution

A catalyst solution was prepared in the same manner as in Example 23 except that 4.7 mg of rac-dimethylsilylene-bis{1-(2-methyl-4-phenylindenyl)}zirconium dichloride (compound d) was used in place of the compound c.

### Polymerization

Copolymerization of ethylene and 1-octene was carried out in the same manner as in Example 19 except that 2.0 ml of the catalyst solution obtained above was used in place of the compound c. The results are set forth in Table 2.

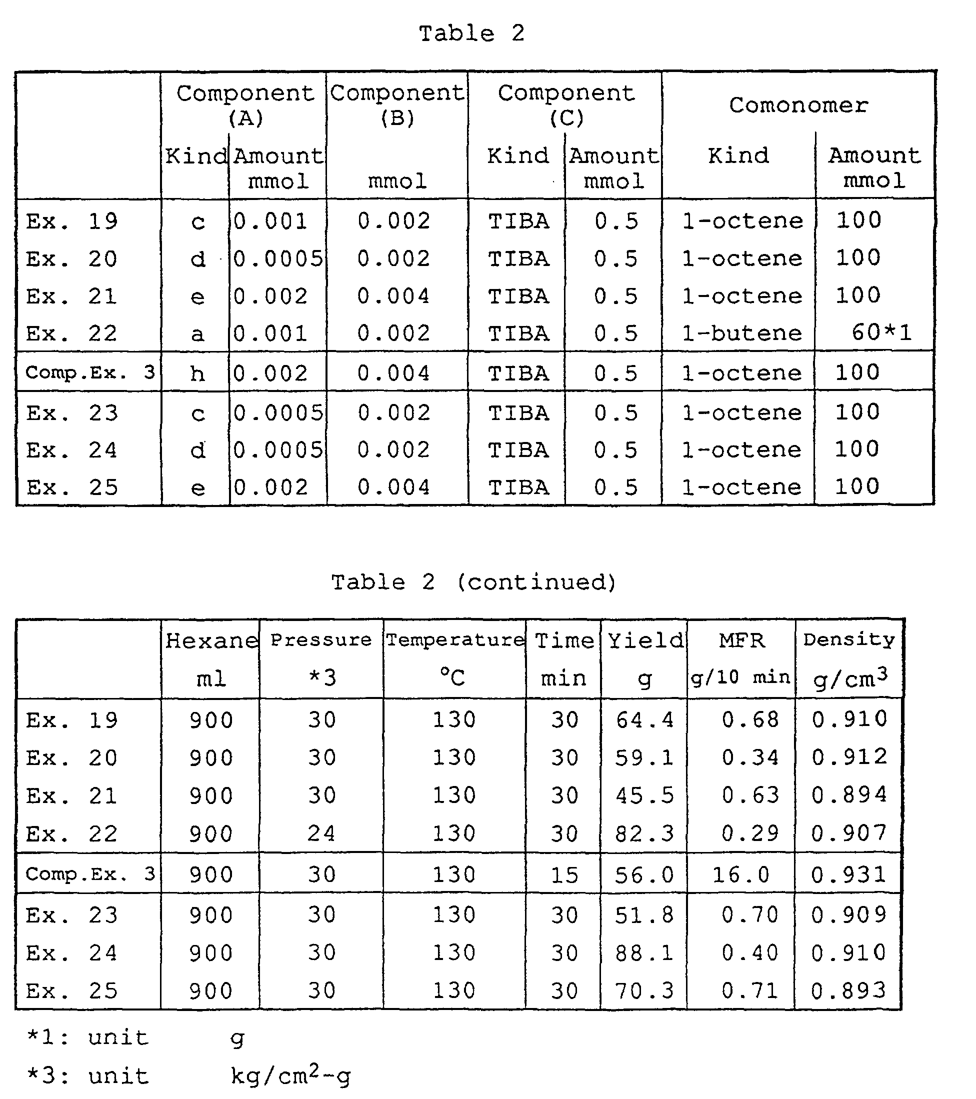

### Component (B):

triphenylcarbeniumtetrakis(pentafluorophenyl)borate

## Claims

1. A process for preparing an ethylene copolymer, comprising copolymerising ethylene and an α-olefin of 3 to 20 carbon atoms in solution at a temperature of 120 to 200°C in the presence of a catalyst comprising:
(A) at least one group IVB transition metal compound selected from compounds of the following formulas (I), (II) and (III) ,
(B)
(B-1) an organoaluminum oxy-compound, and/or
(B-2) a boron-containing compound selected from the group consisting of Lewis acid ionic compound, borane compounds and carborane compounds which reacts with the Group IVB transition metal compound (A) to form an ion pair,
and
(C) an organoaluminum compound; 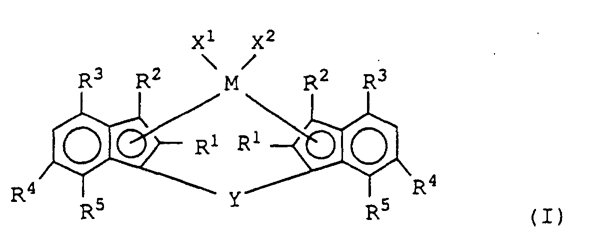
wherein M is zirconium,
R¹ and R² may be the same or different from each other, and are each hydrogen, an alkyl group of 1 to 3 carbon atoms,
R³, R⁴ and R⁵ may be the same or different from each other. and are each methyl, ethyl, n-propyl, i-propyl, n-butyl, sec-butyl, tert-butyl, pentyl or hexyl, and R4 may represent hydrogen,
X¹ and X² may be the same or different from each other, and are each hydrogen, a halogen atom or a hydrocarbon group of 1 to 20 carbon atoms, and
Y is alkylsilylene, alkylarylsilylene or arylsilylene; 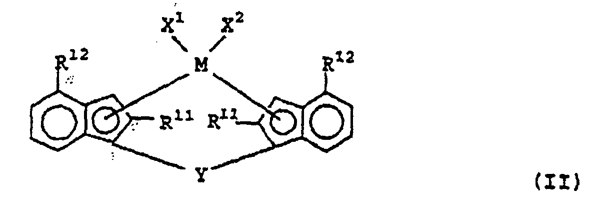 wherein is zirconium,
R¹¹'s may be the same or different from each other, and are each an alkyl group of 1 to 4 carbon atoms,
R¹²'s may be the same or different from each other, and are each an aryl group of 6 to 10 carbon atoms, and said aryl group may be substituted with a halogen atom or a hydrocarbon group of 1 to 20 carbon atoms,
X¹ and X² may be the same as or different from each other, and have the same meanings as defined in the formula (I), and
Y has the same meaning as defined in the formula (I); 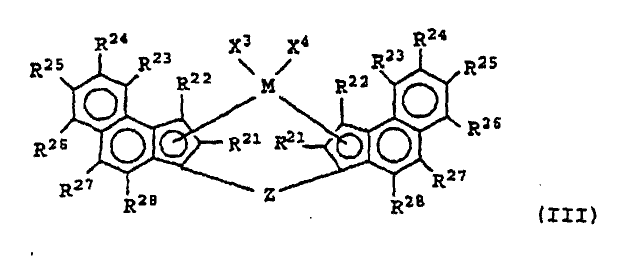 wherein M is zirconium,
R²¹'s may be the same or different from each other, and are each an alkyl group of 1 to 4 carbon atoms,
R²² to R²⁸ may be the same or different from each other, and each of them is the same as R²¹, or hydrogen or at least two adjacent groups among the groups indicated by R²² to R²⁸ may form an aromatic ring or an aliphatic ring together with atoms to which said at least two groups are bonded,
X³ and X⁴ may be the same or different from each other, and are each hydrogen, an alkyl group of 1 to 3 carbon atoms or a halogen atom, and 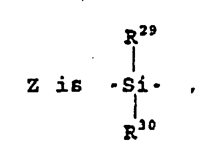 R²⁹ and R³⁰ may be the same or different from each other, and each are methyl or phenyl.

2. The process as claimed in claim 1, wherein (A) at least one Group IVB transition metal compound is elected from the group consisting of
(a)
rac-dimethylsilylene-bis{1-(2-methyl-4-isopropyl-7-methylindenyl)}zirconium dichloride,
(c) rac-dimethylsilylene-bis{1-(2-methyl-4,5-benzoindenyl)}zirconium dichloride,
(d) rac-dimethylsilylene-bis{1-(2-methyl-4,5-acenaphthocyclopentadienyl)}zirconium dichloride, and
(e) rac-dimethylsilylene-bis{1-(2-methyl-4-phenylindenyl)}zirconium dichloride.

3. The process as claimed in claim 1 or 2, wherein the α-olefin is 1-butene, 1-hexene or 1-octene.

## Patentansprüche

1. Verfahren zur Herstellung eines Ethylencopolymers, umfassend das Copolymerisieren von Ethylen und einem α-Olefin von 3 bis 20 Kohlenstoffatomen in Lösung bei einer Temperatur von 120 bis 200°C in der Gegenwart eines Katalysators, umfassend:
(A) zumindest eine Übergangsmetallverbindung der Gruppe IVB, ausgewählt aus Verbindungen der folgenden Formeln (I), (II) und (III),
(B)
(B-1) eine Organoaluminiumoxyverbindung und/oder
(B-2) eine Bor-enthaltende Verbindung, ausgewählt aus der Gruppe bestehend aus Lewis-Säuren, ionischen Verbindungen, Boranverbindungen und Carboranverbindungen, welche mit der Übergangsmetallverbindung der Gruppe IVB (A) reagiert unter Bildung eines Ionenpaars, und
(C) eine Organoaluminiumverbindung; 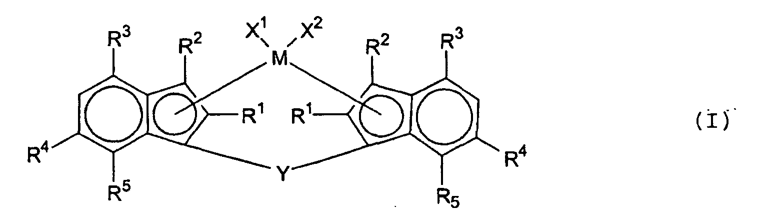
worin M Zirkonium ist,
R¹ und R² können dieselben sein oder sich voneinander unterscheiden und sind jeweils Wasserstoff, eine Alkylgruppe von 1 bis 3 Kohlenstoffatomen,
R³, R⁴ und R⁵ können dieselben sein oder sich voneinander unterscheiden und sind jeweils Methyl, Ethyl, n-Propyl, i-Propyl, n-Butyl, sec-Butyl, tert-Butyl, Pentyl oder Hexyl, und R⁴ kann Wasserstoff repräsentieren,
X¹ und X² können dieselben sein oder sich voneinander unterscheiden und sind jeweils Wasserstoff, ein Halogenatom oder eine Kohlenwasserstoffgruppe von 1 bis 20 Kohlenstoffatomen, und
Y ist Alkylsilylen, Alkylarylsilylen oder Arylsilylen; 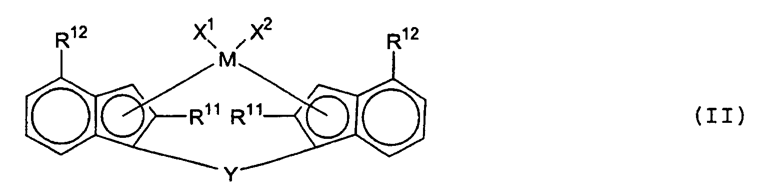 worin M Zirkonium ist,
R¹¹ können dieselben sein oder sich voneinander unterscheiden und sind jeweils eine Alkylgruppe von 1 bis 4 Kohlenstoffatomen,
R¹² können dieselben sein oder sich voneinander unterscheiden und sind jeweils eine Arylgruppe von 6 bis 10 Kohlenstoffatomen, und besagte Arylgruppe kann substituiert sein mit einem Halogenatom oder einer Kohlenwasserstoffgruppe von 1 bis 20 Kohlenstoffatomen,
X¹ und X² können dieselben sein oder sich voneinander unterscheiden und haben dieselben Bedeutungen wie in Formel (I) definiert, und
Y hat dieselbe Bedeutung wie in Formel (I) definiert; 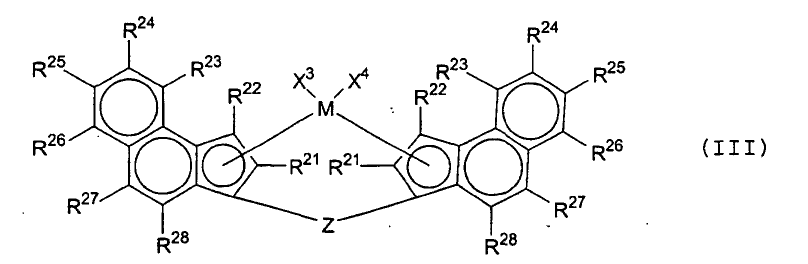 worin M Zirkonium ist,
R²¹ können dieselben sein oder sich voneinander unterscheiden und sind jeweils eine Alkylgruppe mit 1 bis 4 Kohlenstoffatomen,
R²² bis R²⁸ können dieselben sein oder sich voneinander unterscheiden, und jedes von ihnen ist dasselbe wie R²¹ oder Wasserstoff oder zumindest zwei benachbarte Gruppen unter den mit R²² bis R²⁸ bezeichneten Gruppen können einen aromatischen Ring oder einen aliphatischen Ring zusammen mit den Atomen, an die die besagten zumindest zwei Gruppen gebunden sind, bilden,
X³ und X⁴ können dieselben sein oder sich voneinander unterscheiden und sind jeweils Wasserstoff, eine Alkylgruppe von 1 bis 3 Kohlenstoffatomen oder ein Halogenatom,
und
Z ist 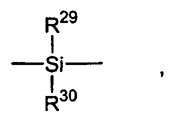 R²⁹ und R³⁰ können dieselben sein oder sich voneinander unterscheiden und sind jeweils Methyl oder Phenyl.

2. Verfahren nach Anspruch 1, worin (A) zumindest eine Übergangsmetallverbindung der Gruppe IVB ist, die ausgewählt ist aus der Gruppe bestehend aus:
(a) rac-Dimethylsilylen-bis{1-(2-methyl-4-isopropyl-7-methylindenyl)}zirkoniumdichlorid,
(c) rac-Dimethylsilylen-bis{1-(2-methyl-4,5-benzoindenyl)}zirkoniumdichlorid,
(d) rac-Dimethylsilylen-bis{1-(2-methyl-4,5-acenaphthocyclopentadienyl)}zirkoniumdichlorid,
(e) rac-Dimethylsilylen-bis{1-(2-methyl-4-phenylindenyl)}zirkoniumdichlorid.

3. Verfahren nach Anspruch 1 oder 2, worin das α-Olefin 1-Buten, 1-Hexen oder 1-Octen ist.

## Revendications

1. Procédé pour la préparation d'un copolymère d'éthylène, comprenant de copolymériser de l'éthylène et une α-oléfine de 3 à 20 atomes de carbone en solution à une température de 120 à 200 °C en présence d'un catalyseur comprenant :
(A) au moins un composé de métal de transition du groupe IVB choisi à partir des composés des formules (I), (II) et (III) suivantes,
(B)
(B-1) un composé oxy d'aluminium organique, et/ou
(B-2) un composé contenant du bore choisi dans le groupe constitué par un acide de Lewis, un composé ionique, des composés de borane et des composés de carborane, qui réagit avec le composé de métal de transition du groupe IVB (A) afin de former une paire d'ion, et
(C) un composé d'aluminium organique ; 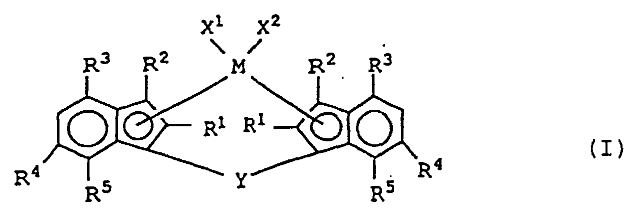 dans laquelle M est du zirconium,
R¹ et R² peuvent être les mêmes ou différents l'un par rapport à l'autre, et sont chacun de l'hydrogène, un groupe alkyle de 1 à 3 atomes de carbone,
R³, R⁴ et R⁵ peuvent être les mêmes ou différents les uns par rapport aux autres, et sont chacun un méthyle, un éthyle, un n-propyle, un i-propyle, un n-butyle, un sec-butyle, un tert-butyle, un pentyle ou un hexyle, et R⁴ peut représenter de l'hydrogène,
X¹ et X² peuvent être les mêmes ou différents l'un par rapport à l'autre, et sont chacun de l'hydrogène, un atome d'halogène ou un groupe hydrocarbure de 1 à 20 atomes de carbone, et
Y est un alkylsilylène, un alkylarylsilylène ou un arylsilylène ; 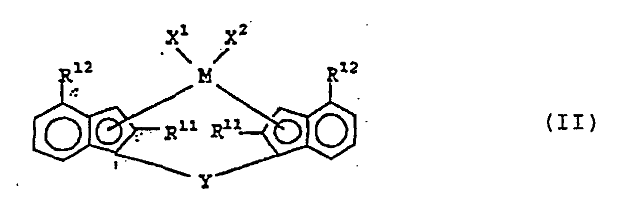 dans laquelle M est du zirconium,
les R¹¹ peuvent être les mêmes ou différents l'un par rapport à l'autre, et sont chacun un groupe alkyle de 1 à 4 atomes de carbone,
les R¹² peuvent être les mêmes ou différents l'un par rapport à l'autre, et sont chacun un groupe aryle de 6 à 10 atomes de carbone, et ledit groupe aryle peut être substitué avec un atome d'halogène ou un groupe d'hydrocarbure de 1 à 20 atomes de carbone,
X¹ et X² peuvent être les mêmes ou différents l'un par rapport à l'autre, et ont la même signification comme défini dans la formule (I), et
Y est a la même signification comme défini dans la formule (I) ; 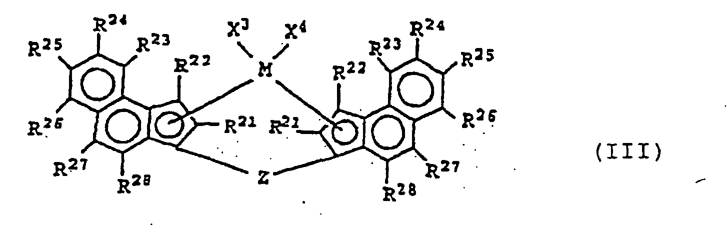 dans laquelle M est du zirconium,
les R²¹ peuvent être les mêmes ou différents l'un par rapport à l'autre, et sont chacun un groupe alkyle de 1 à 4 atomes de carbone,
les R²² à R²⁸ peuvent être les mêmes ou différents les uns par rapport aux autres, et chacun d'entre eux est le même que R²¹, ou un hydrogène ou au moins deux groupes adjacents parmi les groupes indiqués par R²² à R²⁸ peuvent former un cycle aromatique ou un cycle aliphatique ensemble avec des atomes auxquels lesdits au moins deux groupes sont liés,
X³ et X⁴ peuvent être les mêmes ou différents l'un par rapport à l'autre, et sont chacun de l'hydrogène, un groupe alkyle de 1 à 3 atomes de carbone ou un atome d'halogène, et
Z est 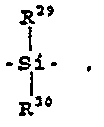 R²⁹ et R³⁰ peuvent être les mêmes ou différents l'un par rapport à l'autre, et sont chacun un méthyle ou un phényle.

2. Procédé comme revendiqué dans la revendication 1, dans lequel (A) au moins un composé de métal de transition du groupe IVB est choisi dans le groupe constitué par
(a) du dichlorure de rac-diméthylsilylène-bis(1-(2-méthyl-4-isopropyl-7-méthylindényl))zirconium,
(c) du dichlorure de rac-diméthylsilylène-bis(1-(2-méthyl-4,5-benzoindényl))zirconium,
(d) du dichlorure de rac-diméthylsilylène-bis(1-(2-méthyl-4,5-acénaphtocyclopentadiényl))zirconium, et
(e) du dichlorure de rac-diméthylsilylène-bis(1-(2-méthyl-4-phénylindényl))zirconium.

3. Procédé comme revendiqué dans la revendication 1 ou 2, dans lequel l'α-oléfine est un 1-butène, un 1-hexène ou un 1-octène.
